# EUROPEAN PATENT APPLICATION

(11) **EP 1 783 756 A1**
(43) Date of publication of application: **09.05.2007**
(21) Application number: 05024346.8
(22) Date of filing: 08.11.2005
(51) Int. Cl.: G11B 7/09, H01F 7/16, H02K 33/06

(54) **Cylinder-like electromagnetic motor**

(71) Applicant: TDK TAIWAN CORP., Taipei (TW)
(72) Inventor: Chang, Wen-Chia, Yangmei Taoyuan (TW)
(74) Representative: Viering, Jentschura & Partner

(57) **Abstract**

A cylinder-like electromagnetic motor of the present invention includes a base having a closed-bottom central hole; a cover connected to the top of the base; a spring piece located between the cover and the top of the base; a holder movably received in the central hole of the base; a magnetic element fitted to a bottom of the central hole of the base to locate below the holder; and an electromagnetic element fitted below the magnetic element. When a current is supplied to the electromagnetic element to produce an electromagnetic field, the magnet element and the electromagnetic element mutually repulse or attract to produce a push force against the holder to move the holder forward. When the current is cut off, the electromagnetic field vanishes and the spring piece elastically pushes the holder backward to an initial position in the base.

## Description

### FIELD OF THE INVENTION

The present invention relates to a cylinder-like electromagnetic motor, and more particularly to an electromagnetic motor that has an actuating structure similar to that of a cylinder and provides the same function as a voice coil motor, but has less components, smaller volume, and simpler structure than the voice coil motor.

### BACKGROUND OF THE INVENTION

A voice coil motor (VCM) has the advantages of small volume, low power consumption, accurately actuated displacement, and low price, and is very suitable for use as a short-distance actuator in many electronic products, such as the vibrating motor for a mobile phone, the vertical displacement actuator of a magnetic head or an optical pickup, the auto-focusing actuator for a camera, etc.

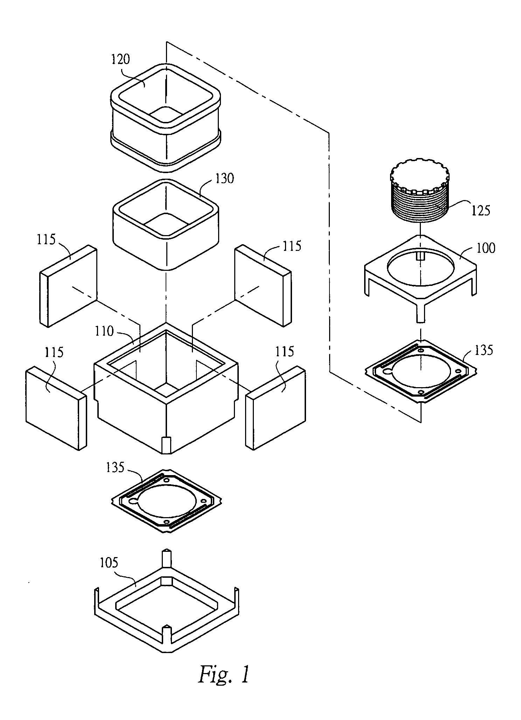

Fig. 1 is an exploded perspective view of a conventional voice coil motor used in a camera for auto focusing (AF). As shown, the voice coil motor mainly includes an upper cover 100, a lower cover 105, and an outer frame 110 having four inner wall surfaces provided with a magnet 115 each, an internally threaded lens holder 120 for a lens 125 to screw thereinto, a coil 130 wound around an outer side of the lens holder 120, and an upper and a lower spring piece 135. The lens holder 120 is supported by the upper and the lower spring piece 135 to movably locate in the outer frame 110 and be surrounded by the four magnets 115.

When the coil 130 is supplied with a current to produce a magnetic field, the lens holder 120 and the four magnets 115 mutually repulse or attract to thereby produce a push force against the lens holder 120. Since the lens holder 120 is supported by the spring pieces 135, it is displaced forward or backward in the outer frame 110 by the push force.

The conventional voice coil motor has a relatively large overall volume and includes a lot of components that involve complicate assembling, and therefore requires increased manufacturing cost.

It is therefore tried by the inventor to develop an improved cylinder-like electromagnetic motor to overcome the disadvantages in the conventional voice coil motor.

### SUMMARY OF THE INVENTION

A primary object of the present invention is to provide a structurally new cylinder-like electromagnetic motor that has reduced components and accordingly reduced overall volume to largely decrease the material and assembling cost of the motor.

Another object of the present invention is to provide a structurally new cylinder-like electromagnetic motor that has simplified structure and lowered power consumption, and operates in an even more active and rapid manner.

To achieve the above and other objects, the cylinder-like electromagnetic motor of the present invention includes a base having a closed-bottom central hole; a cover connected to the top of the base; a spring piece located between the cover and the top of the base; a holder movably received in the central hole of the base; a magnetic element fitted to a bottom of the central hole of the base to locate below the holder; an electromagnetic element fitted below the magnetic element. Due to an electromagnetic field effect between the magnet element and the electromagnetic element, the holder located above the magnetic element is pushed forward or backward in the base.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 is an exploded perspective view of a conventional voice coil motor;
Fig. 2 is an exploded perspective view of a cylinder-like electromagnetic motor according to a preferred embodiment of the present invention; and
Fig. 3 is a sectional view of the cylinder-like electromagnetic motor of Fig. 2 in an actuated state.

### DETAILED DESCRIPTION OF THE PREFERRED EMBODIMENTS

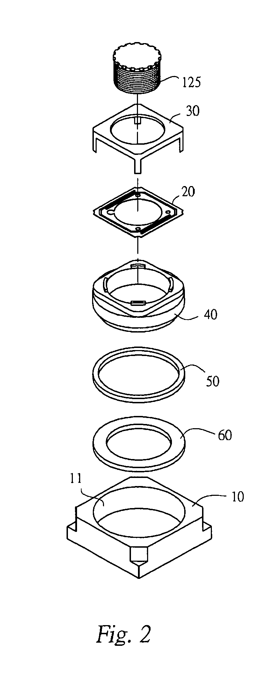

Please refer to Fig. 2 that is an exploded perspective view of a cylinder-like electromagnetic motor according to a preferred embodiment of the present invention. As shown, the cylinder-like electromagnetic motor of the present invention includes a base 10, a spring piece 20, a cover 30, a holder 40, a magnetic element 50, and an electromagnetic element 60. The base 10 is provided with a closed-bottom central hole 11, in which all other components 20, 30, 40, 50, and 60 of the electromagnetic motor are received. Since the base 10 has a reduced volume as compared with the conventional voice coil motor, the electromagnetic motor of the present invention may have a relatively small overall volume. The cover 30 is fixedly connected to a top of the base 10.

The spring piece 20 is located between the cover 30 and the top of the base 10, and is provided at predetermined positions with a plurality of curved narrow openings to be divided into a movable inner portion and a fixed outer portion. The movable inner portion of the spring piece 20 is screwed to the holder 40, and the fixed outer portion of the spring piece 20 is screwed to the top of the base 10. The holder 40 is movably supported in the central hole 11 of the base 10 due to the spring piece 20 that is connected at the movable inner portion to the holder 40 and at the fixed outer portion to the base 10. The holder 40 is internally threaded for a lens 125 to screw thereinto. Since the spring piece 20 is actually a plate spring, it provide relatively good elasticity and restoring force, enabling the holder 40 to have a large moving distance relative to the base 10.

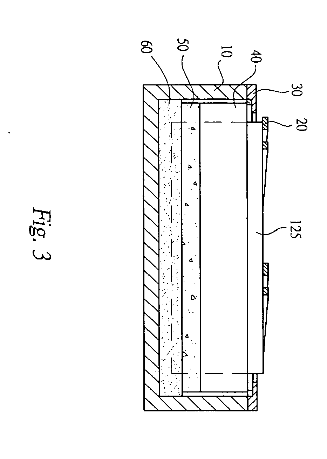

Fig. 3 is a sectional view showing the cylinder-like electromagnetic motor of the present invention in an actuated state. As shown, the electromagnetic element 60 is located at a bottom of the central hole 11 of the base 10, and the magnetic element 50 is disposed on a top of the electromagnetic element 60 and immediately below the holder 40. When a current is supplied to the electromagnetic element 60, an electromagnetic field is produced, causing the electromagnetic element 60 and the magnetic element 50 to mutually attract or repulse to thereby produce a push force against the holder 40 for the latter to move forward or backward. Reversely, when the current supplied to the electromagnetic element 60 is cut off, the produced electromagnetic field vanishes, and the restoring force of the spring piece 20 automatically pushes the holder 40 and the magnetic element 50 backward to their initial position in the base 10. In the preferred embodiment of the present invention, the magnetic element 50 is a magnet, and the electromagnetic element 60 is an electromagnet.

Both the spring piece 20 and the cover 30 are provided with a central hole corresponding to the central hole 11 on the base 10, and the spring piece 20 is preferably mounted on and around a top peripheral area of the holder 40, so that the lens 125 may be screwed into the holder 40 via the central holes of the cover 30 and the spring piece 20.

From a comparison of Fig. 2 with Fig. 1, it is found the electromagnetic motor of the present invention omits the lower cover 105, the lower spring piece 135, and three magnets 115 that are included in the conventional voice coil motor. Meanwhile, the base 10 and the magnet element 50 in the present invention have volumes smaller than that in the conventional voice coil motor. Since the electromagnetic motor of the present invention has fewer components and relatively reduced volume, it requires less material and can therefore be produced at lowered cost.

The electromagnetic motor of the present invention applies an actuating principle different from that of the conventional voice coil motor. In the voice coil motor, fixed magnets are located around an inner movable coil to produce a magnetic field and accordingly an actuating force. However, in the present invention, a fixed electromagnet is located below a movable magnet to produce an electromagnetic field and accordingly a forward push force or a backward attraction force, just like the motion of a cylinder in an automobile to produce power at the bottom of the cylinder.

The present invention has been described with a preferred embodiment thereof and it is understood that many changes and modifications in the described embodiment can be carried out without departing from the scope and the spirit of the invention that is intended to be limited only by the appended claims.

## Claims

1. A cylinder-like electromagnetic motor, comprising:
a base having a closed-bottom central hole;
a holder being movably received in said central hole of said base;
a magnetic element being fitted to a bottom of said central hole of said base;
an electromagnetic element being fitted below said magnetic element and adapted to produce an electromagnetic field when a current is supplied thereto; said produced electromagnetic field causing said electromagnetic element and said magnetic element to mutually repulse or attract to thereby produce a forward push force against said magnetic element and accordingly said holder located above said magnetic element;
a spring piece provided at predetermined positions with a plurality of curved narrow openings to be divided into a movable inner portion and fixed outer portion; said movable inner portion being screwed to a top of said holder, and said fixed outer portion being screwed to a top of said base; and
a cover connected to the top of said base to locate above said spring piece.

2. The cylinder-like electromagnetic motor as claimed in claim 1, wherein said holder is internally threaded for a lens to screw thereinto.

3. The cylinder-like electromagnetic motor as claimed in claim 1, wherein said spring piece is mounted on and around a top peripheral area of said holder.

4. The cylinder-like electromagnetic motor as claimed in claim 1, wherein said spring piece and said cover are provided with a central hole each corresponding to said central hole on said base.

5. The cylinder-like electromagnetic motor as claimed in claim 1, wherein said magnetic element is a magnet.

6. The cylinder-like electromagnetic motor as claimed in claim 1, wherein said electromagnetic element is an electromagnet.

7. A cylinder-like electromagnetic motor having a base with a closed-bottom central hole and a holder movably received in the central hole of said base, said electromagnetic motor comprising:
a magnetic element fitted to a bottom of the central hole of said base; and
an electromagnetic element fitted below said magnetic element and adapted to produce an electromagnetic field when a current is supplied thereto; said produced electromagnetic field causing said electromagnetic element and said magnetic element to mutually repulse or attract to thereby produce a forward push force against said magnetic element and accordingly said holder located above said magnetic element.

8. The cylinder-like electromagnetic motor as claimed in claim 7, further comprising a spring piece being provided at predetermined positions with a plurality of curved narrow openings to be divided into a movable inner portion and fixed outer portion; said movable inner portion being screwed to a top of said holder, and said fixed outer portion being screwed to a top of said base; said movable inner portion being elastically bent due to said push force produced by said mutually repulsed electromagnetic and magnetic elements against said holder; and said bent spring piece having an elastic restoring force adapted to move said holder backward to an initial position in said base when said push force vanishes.

9. The cylinder-like electromagnetic motor as claimed in claim 8, wherein said spring piece has a central hole corresponding to the central hole on said base.

10. The cylinder-like electromagnetic motor as claimed in claim 7, wherein said holder is internally threaded for a lens to screw thereinto.

11. The cylinder-like electromagnetic motor as claimed in claim 7, wherein said spring piece is mounted on and around a top peripheral area of said holder.

12. The cylinder-like electromagnetic motor as claimed in claim 7, further comprising a cover connected to a top of said base.

13. The cylinder-like electromagnetic motor as claimed in claim 12, wherein said cover has a central hole corresponding to the central hole on said base.

14. The cylinder-like electromagnetic motor as claimed in claim 7, wherein said magnetic element is a magnet.

15. The cylinder-like electromagnetic motor as claimed in claim 7, wherein said electromagnetic element is an electromagnet.
